Europäisches Patentamt

European Patent Office

Office européen des brevets

(11) Veröffentlichungsnummer: **0 370 945**

**A1**

(12) **EUROPÄISCHE PATENTANMELDUNG**

(21) Anmeldenummer: **89810783.4**

(22) Anmeldetag: **17.10.89**

(51) Int. Cl.⁵: **E01F 7/04, D07B 1/18,**
**F16G 11/02, //B21F31/00**

(30) Priorität: **10.11.88 CH 4170/88**

(43) Veröffentlichungstag der Anmeldung:
**30.05.90 Patentblatt 90/22**

(84) Benannte Vertragsstaaten:
**AT CH DE ES FR IT LI**

(71) Anmelder: **FATZER AG**
**Salmsacherstrasse 9**
**CH-8590 Romanshorn(CH)**

(72) Erfinder: **Züst, Roland**
**Amriswilerstrasse 9**
**CH-8590 Romanshorn(CH)**
Erfinder: **Eicher, Berhard**
**Niederzel**
**CH-9325 Roggwil(CH)**
Erfinder: **Giezendanner, Peter**
**Widgärtli 5**
**CH-8598 Bottighofen(CH)**

(74) Vertreter: **Bosshard, Ernst**
**Schulhausstrasse 12**
**CH-8002 Zürich(CH)**

(54) **Stahldrahtseilnetz für Steinschlag-und Lawinenverbauungen.**

(57) Das Netz besteht aus durch Klemmen (4) ge-schlossenen Ringen (1,3) aus Spiraldrahtseil, wobei jeweils die Randringe (3) durch ein Randseil (2) geschlauft sind. Die inneren Ringe (1) sind unterein-ander und mit den vorzugsweise stärkeren Randrin-gen (3) verschlauft, während die Randringe (3) unter-einander unverschlauft sind und zueinander einen gegenseitigen Abstand haben. Die Randringe (3) können als Seilstruppen ausgebildet sein.

EP 0 370 945 A1

## Stahldrahtseilnetz für Steinschlag- und Lawinenverbauungen

Die Erfindung bezieht sich auf ein Stahldrahtseilnetz zur Aufnahme kinetischer Energie, insbesondere für Steinschlag- und Lawinenverbauungen, mit Drahtseilringen, wobei die Randringe durch ein Randseil geschlauft, die einzelnen Ringe durch Klemmen geschlossen, und die mit den Randringen verbundenen inneren Ringe gegenseitig mit den Randringen verschlauft sind.

Es ist bereits bekannt, Auffangzäune und Netze zu erstellen zum Schutz gegen Steinschlag und Lawinen.

Beim Aufprall grösserer Steinmassen od.dgl. sind solche Zäune und Netze ihrer Aufgabe oftmals nicht voll gewachsen. Andererseits wird der Transport und die Montage in oft unwegsamem Gelände mit zunehmendem Gewicht der Verbauungsteile schwieriger. Zudem treffen zwei sich widersprüchliche Forderungen aufeinander, indem einerseits eine hohe Flexibilität des Netzes gewünscht wird, was Litzenseile mit dünnen Drähten voraussetzt, da ja die Stelle an der herabfallende Steine, Schneemassen od.dgl. aufgefangen werden müssen sich nicht genau voraussagen lässt und die kinetische Energie solcher herabfallender Gesteins- oder Schneemassen durch Verformung des Netzes bzw. der Ringe abgebremst und schliesslich aufgefangen werden muss. Zudem sind dünne Litzenseile einer erhöhten Beschädigungsgefahr, beispielsweise durch herabfallende kantige Steine ausgesetzt, und zudem ist die Korrosionsbeständigkeit dünner Litzenseile - die jahrelang der Witterung ausgesetzt sind - beschränkt. Anderseits habe dikkere Drähte und aus diesen hergestellte Seite eine geringere Flexibilität und ein erhöhtes Gewicht.

Mit der Erfindung soll die Aufgabe gelöst werden, ein gegen Steinschlag, Schneemassen u.dgl. wirksames Stahldrahtseilnetz zu schaffen, das bei vergleichsweise geringem Eigengewicht ein verbessertes kinetisches Energieaufnahmevermögen hat und im Vergleich zu Litzenseilen schlagfester ist und eine bessere Langzeit-Korrosionsbeständigkeit aufweist.

Diese Aufgabe wird durch die im Kennzeichen des Anspruches 1 genannten Merkmale gelöst.

Dies erlaubt durch vergleichsweise geringen Materialaufwand mit niedrigem Eigengewicht ein zur Aufnahme kinetischer Energie geeignetes Netz zu schaffen, wobei die Zugfestigkeit der Drahtseile sehr weitgehend ausgenützt werden kann und das auch mit grosser Wucht auftreffenden Geröll- oder Schneemassen standzuhalten vermag. Dadurch dass die Randringe einen gegenseitigen Abstand haben und untereinander unverschlauft sind, wird eine erhöhte Flexibilität des Netzes erreicht, namentlich wenn die Beanspruchung nicht in der Netzmitte, sondern in überwiegendem Mass seitlich auftritt. Die untereinander unverbundenen Randringe geben dem Netz eine erhöhte Elastizität und ermöglichen ein leichteres Auseinanderziehen der unter einer Stossbelastung verformten Ringe. Durch die Verwendung von Spiralseilen statt Litzenseilen lassen sich die Herstellungskosten der Ringe vermindern. Zudem sind die gegenüber Litzenseilen dickeren Drähte des Spiralseiles gegen Beschädigungen durch Steinschlag od.dgl. weniger empfindlich und die Beständigkeit gegen Langzeit-Korrosion ist verbessert.

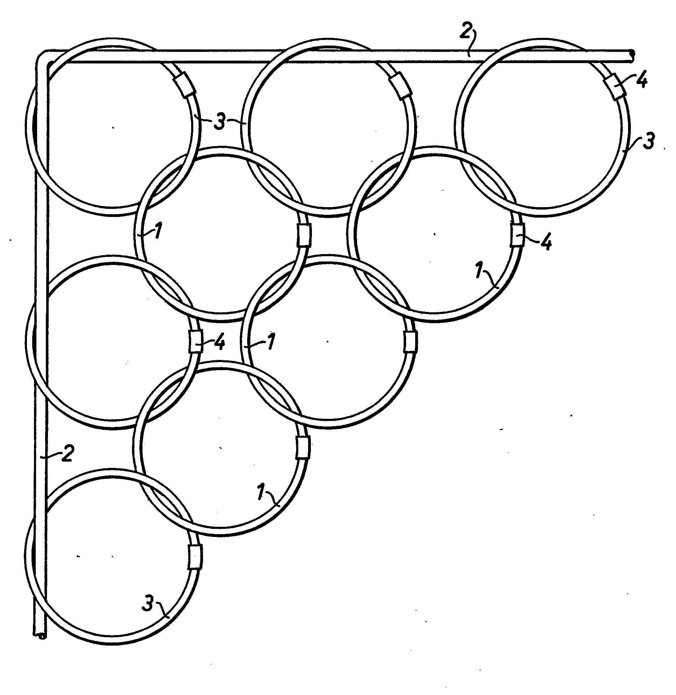

In der Zeichnung ist ein Ausführungsbeispiel des Erfindungsgegenstandes dargestellt. Die Figur zeigt einen Ausschnitt aus einem durch Ringe gebildeten Stahldrahtseilnetz.

Das Stahldrahtseilnetz besteht aus einzelnen, in sich geschlossenen Ringen 1, 3 aus Spiraldrahtseil, die von einem vorzugsweise rechteckig oder dreieckig verlaufenden Randseil 2 umgeben sind. Die Randringe 3 sind untereinander nicht verschlauft, sondern haben einen gegenseitigen Abstand und sind mit dem Randseil 2 verschlauft. Die inneren Ringe 1 sind jeweils entweder mit den Randringen 3 und/oder mit weiteren inneren Ringen 1 verschlauft. Die inneren Ringe 1 sind jeweils über vier Schlaufstellen mit vier anderen Ringen verbunden. Die Ringe 1, 3 bestehen aus Spiraldrahtseilen, vorzugweise mit 7 Drähten, mit einer Seilstärke von 4-20 mm, bei einem Ringdurchmesser von 100-500 mm, vorzugsweise etwa 250 mm. Die sich überlappenden Ringenden sind durch Klemmen in Form von Presshülsen 4 vorzugweise aus Aluminium zugfest verbunden, wobei jeder Ring nur eine einzige Presshülse 4 enthält. Die Randringe 3 können eine grössere Drahtseilstärke haben als die inneren Ringe. Alle Ringe 1,3 haben angenähert den gleichen, angenähert kreisrunden Durchmesser, der sich nach den Geländebedingungen richtet, d.h. wenn eher grosskalibrige Steinbrocken zu erwarten und aufzufangen sind, wird der Ringdurchmesser grösser gewählt als wenn kleinere Steine od.dgl. zu erwarten sind.

Im Gegensatz zu Netzen mit fester Maschengrösse hat die Ausbildung mit ineinander verschlauften Ringen und im Abstand voneinander angeordneten Randringen 3 eine verbesserte Flexibilität mit erhöhter Auffang- und Tragkraft, namentlich wenn eine Stossbelastung aussermittig erfolgt.

Die Randringe 3 könnten auch als Seilstruppen ausgebildet werden.

Derartige Netze werden mit an sich bekannten Verankerungsmitteln, wie z.B. einbetonierten Stahlstützen verbunden.

An Stelle eines rechteckigen Randseiles 2 könnte dieses auch eine andere polygonale Form haben oder kreisrund ausgebildet sein.

**Ansprüche**

1. Stahldrahtseilnetz zur Aufnahme kinetischer Energie, insbesondere für Steinschlag- und Lawinenverbauungen, mit Drahtseilringen, wobei die Randringe (3) durch ein Randseil (2) geschlauft, die einzelnen Ringe durch Klemmen (4) geschlossen, und die mit den Randringen (3) verbundenen inneren Ringe (1) gegenseitig mit den Randringen (3) verschlauft sind, dadurch gekennzeichnet, dass die Ringe aus einem Spiraldrahtseil bestehen und die Randringe (3) untereinander unverschlauft sind und zueinander einen gegeseitigen Abstand haben.

2. Stahldrahtseilnetz nach Anspruch 1, dadurch gekennzeichnet, dass die Klemmen (4) Aluminium-Presshülsen sind.

3. Stahldrahtseilnetz nach Anspruch 1, dadurch gekennzeichnet, dass die Randringe (3) im Vergleich zu den Innenringen (1) eine grössere Drahtseilstärke haben.

4. Stahldrahtseilnetz nach Anspruch 1, dadurch gekennzeichnet, dass die Randringe (3) als Seilstruppen ausgebildet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 511 983 (INDUSTRA, INDUSTRIE- UND STRASSENBAU et al.) <br> * Spalte 1, Zeilen 1-3; Spalte 2, Zeilen 8-15; Spalte 3, Zeilen 42,62; Spalte 4, Zeilen 20-24; Spalte 5, Patentanspruch, Unteransprüche 2,3; Figur 4 * | 1 | E 01 F 7/04 <br> D 07 B 1/18 <br> F 16 G 11/02 // <br> B 21 F 31/00 |
| A | --- | 2 | |
| Y | TRAVAUX, Nr. 590, Juli-August 1984, Seiten 75-77; F. GRECH: "Protection de la route du littoral contre les chutes de pierres" <br> * Seite 76, rechte Spalte, Zeilen 15-18,22-27,29,30; Seite 77, linke Spalte, Zeilen 1-5,11-14; untere Figur * | 1 | |
| Y,P | FR-A-2 622 611 (MECANROC) <br> * Seite 1, Zeilen 1-4; Seite 7, Zeilen 24-28,31-33; Figur 4 * <br> --- | 1 | |
| Y | DE-C- 123 957 (FELTEN & GUILLAUME CARLSWERK) <br> * Seite 1, Zeilen 1,2,8-12,17-21; einzige Fig. * <br> --- | 1 | **RECHERCHIERTE SACHGEBIETE (Int. Cl.5)** <br> E 01 F <br> B 21 F <br> B 63 G <br> B 65 H |
| A | DE-B-1 296 151 (GEBR. WANNER) <br> * Spalte 1, Zeilen 1-3,54-56; Spalte 2, Zeilen 1-11,15-18,48-50; Patentansprüche 1-3; Figuren 1,2 * <br> --- | 1 | B 66 C <br> D 07 B <br> F 16 G <br> F 41 H <br> F 42 D |
| A | US-A-3 539 135 (BERG) <br> * Spalte 1, Zeilen 72-75; Spalte 2, Zeilen 1-6,13-21,24-35; Figuren 1,4,5 * <br> ---      -/- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 14-02-1990 | SCHUMAN R. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C- 210 340 (BAUDET) <br> * Seite 2, Zeilen 11-20; Figur 1 * <br> --- | 1 | |
| L | CH-A- 324 024 (KABELWERKE BRUGG) <br> * Seite 1, Zeilen 1-15; einzige Fig. * <br> "Drahtseilstruppe" <br> --- | 4 | |
| A | GB-A- 14 787 (BULLIVANT et al.)(A.D.1914) <br> * Seite 3, Zeilen 23-27,30-35,38-43; <br> Seite 4, Zeilen 34-38; Figuren 7,8 * <br> ----- | 3,4 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 14-02-1990 | SCHUMAN R. |